# DEMANDE DE BREVET EUROPEEN

(11) **EP 1 450 232 A1**
(43) Date de publication de la demande: **25.08.2004**
(21) Numéro de dépôt: 03290402.1
(22) Date de dépôt: 18.02.2003
(51) Int. Cl.: G06F 1/00, G06F 11/28

(54) **Procede de securisation de l'execution de code contre des attaques**

(71) Demandeur: SCHLUMBERGER Systèmes, 92120 Montrouge (FR)
(72) Inventeur: Giraud, Nicolas, 78150 Le Chesnay (FR); Rainsard, Stéphane, 78150 Le Chesnay (FR)
(74) Mandataire: Renault, Patricia

(57) **Abrégé**

Le procédé selon la présente invention concerne un procédé de sécurisation de l'exécution d'au moins un module dans une unité électronique comportant des moyens de traitement de l'information et des moyens de mémorisation d'informations. Le procédé consiste, en début d'exécution d'un module, à stocker dans lesdits moyens de mémorisation un indicateur constitué par un identifiant dudit module, et à la fin de l'exécution dudit module, à retrouver ledit indicateur stocké dans lesdits moyens de mémorisation et à vérifier que ledit indicateur correspond à l'identifiant du module exécuté.

La présente invention concerne également l'unité électronique dans lequel ledit procédé est implémenté et la carte comprenant ledit module.

## Description

La présente invention concerne un procédé et un dispositif de sécurisation d'un ensemble électronique mettant en oeuvre un programme à protéger. Plus précisément, le procédé vise à proposer une parade aux attaques par rayonnement, flash, lumière, laser, glitch ou autres ou plus généralement à toute attaque perturbant l'exécution des instructions du programme. De telles attaques ont pour conséquence de modifier des instructions à exécuter et pour résultat l'inexécution ou la mauvaise exécution de certaines parties du programme.

### DOMAINE TECHNIQUE

Lors de l'exécution d'un programme sur un microprocesseur, les attaques par exemple par laser, glitch ou rayonnement électromagnétique ont pour conséquence de modifier les codes d'instruction lus par le processeur en mémoire comme transformer un codop d'instruction quelconque en codop 00h (BRSET0 sur 6805, NOP sur 8051 et AVR) : les instructions du programme sont remplacées par des instructions sans effet. Par ce type d'attaque, un fraudeur peut faire exécuter une suite d'instructions inopérantes à la place d'un traitement sécuritaire dans un système d'exploitation pour carte à puce.

Parmi les parades connues, plusieurs ne fournissent pas de solution sur les composants actuels car elles nécessitent des adaptations du matériel (contrôle de parité sur les bus, traitement du codop 00h comme un codop frauduleux). Une solution consiste à positionner des drapeaux dans un octet de la mémoire RAM à intervalles réguliers et à vérifier qu'à un point précis du déroulement du logiciel tous les drapeaux devant être positionnés le sont effectivement. Toutefois la mise en place de cette parade est fastidieuse car il est nécessaire d'allouer des zones de mémoire volatile spécifiques et de rajouter les traitements dans le code à protéger partout où cela est nécessaire. Une protection systématique de tout le code est impossible. De plus, si l'exécution est fortement perturbée, il se peut que la perturbation ne soit détectée que tardivement en fin de commande après que le fraudeur ait obtenu les informations souhaitées.

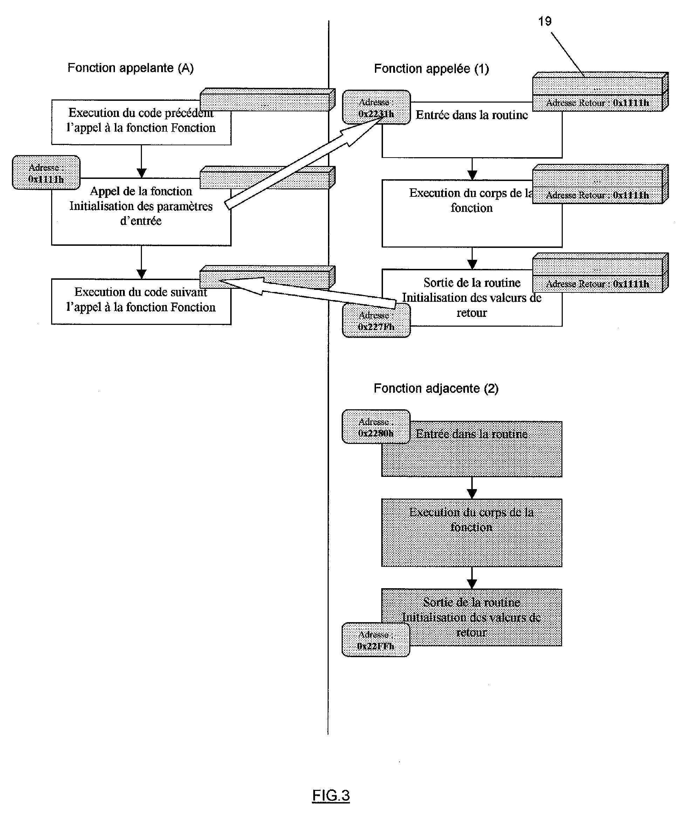

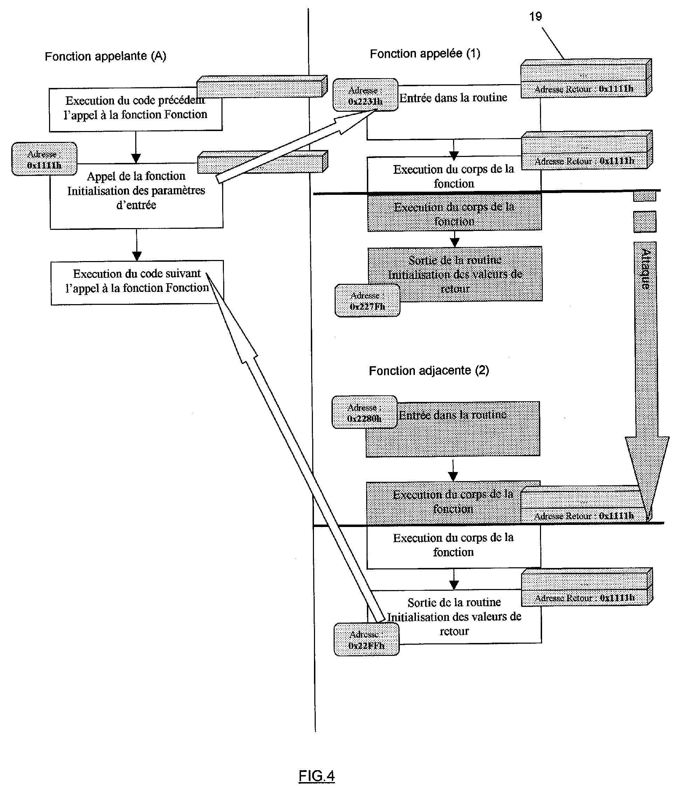

Les figures 3 et 4 représentent respectivement l'exécution d'un programme sans présence et en présence d'une attaque.

Sur la figure 3, lorsque la fonction appelante (A) appelle la fonction appelée (1), l'adresse de retour [Ox1111 h) est placée sur une pile (par exemple la pile du processeur) et la fonction appelée (1) se déroule. Lorsque l'exécution de la fonction appelée (1) se termine, l'instruction de retour est exécutée et après lecture sur la pile de l'adresse de retour, le déroulement du programme se poursuit à l'adresse lue soit dans la fonction appelante (A).

Comme le montre la figure 4, lorsqu'une attaque à la lumière a lieu au cours de l'exécution d'une routine (dans l'exemple illustrée, au cours de l'exécution de la « fonction appelée (1) », dénommée ci-après routine 1), les instructions suivantes de la routine (1), sont remplacées par une suite d'instructions inopérantes sans boucle ni branchement (partie grisée). On atteint ainsi assez vite la fin de la routine. L'une des conséquences directes de ces attaques est que l'instruction de retour de la routine 1 en cours n'est pas exécutée. Lorsque l'attaque cesse, l'exécution se poursuit dans une routine, dans l'exemple illustré la « fonction adjacente (2) », ci-après appelée routine 2, se trouvant à la suite de la routine 1 attaquée dans la mémoire programme. Le début du code de la routine 2 se situe à une adresse 0x2280h qui suit celle 0x227Fh correspondant à la fin de la routine 1 dans la mémoire.

La routine attaquée, la routine 1 dans l'exemple illustré, a vu son exécution perturbée et ne s'est pas terminée correctement. Le fait qu'une autre routine, la routine 2 s'exécute en dehors des cas d'appels prévus dans le logiciel avec des paramètres non initialisés prenant des valeurs imprévisibles et incontrôlées peut également avoir des conséquences graves en terme de sécurité. La détection de la non-exécution d'un traitement prévu est un problème difficile à résoudre. La détection de l'exécution d'un traitement non-prévu est encore plus complexe.

Un but de la présente invention est de proposer une parade à cette attaque permettant de protéger l'ensemble du code avec une certaine probabilité de détecter et d'empêcher ce type d'attaque. Cette parade est implémentable sur les composants actuels (sans adaptation du matériel), peu pénalisante pour les performances et peu consommatrice en ressources.

### RESUME DE L'INVENTION

Le principe de la solution proposée est de stocker, en début d'exécution d'un module, dans des moyens de mémorisation, un indicateur constitué par un identifiant dudit module, et à la fin de l'exécution dudit module, de retrouver ledit indicateur stocké dans lesdits moyens de mémorisation et de vérifier que ledit indicateur correspond à l'identifiant du module exécuté. S'il y a correspondance, l'exécution se poursuit. Dans le cas contraire, une attaque a eu lieu et une frontière entre deux modules a été franchie : l'attaque est détectée et des actions diverses peuvent être prévues en cas de détection d'attaque.

Dans la présente invention, un module est constitué par une portion de code déterminée présentant un point d'entrée et un point de sortie tel qu'un programme, une fonction, une routine ou autre.

L'expression « en début d'exécution d'un module » signifie soit avant l'instruction d'appel dudit module, dans le module appelant, soit dans ledit module (module appelé), avant l'étape de vérification du procédé selon l'invention, et de préférence avant l'exécution du corps du module dans les premières instructions dudit module. L'expression « à la fin de l'exécution dudit module » signifie soit dans ledit module après l'étape de stockage et de préférence, après l'exécution du corps du module et avant une instruction de retour ou de fin d'exécution, soit dans le module appelant après le retour d'appel.

Selon une forme particulière de réalisation, le procédé consiste à placer sur la pile du processeur, au début de chaque routine, un octet identifiant la routine et de contrôler en fin de routine que l'octet lu sur la pile est bien celui attendu.

Un des avantages du procédé selon la présente invention est qu'elle est simple à mettre en oeuvre et permet de protéger l'ensemble du logiciel de manière systématique. Elle protège également contre des attaques perturbant le fonctionnement du processeur et provoquant des sauts intempestifs dans la mémoire programme. Ce mécanisme peut également être implémenté dans le matériel « en hardware » (dans le traitement des instructions d'appel de routine et de retour de routine).

### DESCRIPTION SOMMAIRE DES DESSINS

D'autres buts, avantages et caractéristiques de l'invention apparaîtront à la lecture de la description qui va suivre de la mise en oeuvre du procédé selon l'invention et d'un mode de réalisation d'une unité électronique adaptée pour cette mise en oeuvre, donnés à titre d'exemple non limitatif en référence aux dessins ci-annexés dans lesquels :
- La figure 1 montre une représentation schématique d'un mode de réalisation d'une unité électronique selon la présente invention ;
- la figure 2 constitue une légende pour lire les figures 3 à 6 :
   - Les rectangles non grisés représentent des portions de code exécutées ;
   - Les rectangles grisés représentent des portions de code non exécutées ;
   - Les flèches non grisées représentent les appels et retours de modules ;
   - Les flèches grisées représentent les attaques ; elles définissent la durée et le positionnement de l'attaque dans le programme ;
   - Les rectangles grisés aux bords arrondis représentent l'adresse du programme à l'instant où il est exécuté ;
   - Les rectangles en trois dimensions visualisent l'état de la pile du processeur et des étapes propres au procédé ;
   - Les ellipses représentent les étapes propres au procédé selon la présente invention ;
- la figure 3 est un organigramme représentant le déroulement d'un programme sans attaque et dans lequel le procédé selon la présente invention n'est pas mis en oeuvre ;
- la figure 4 est un organigramme représentant le déroulement d'un programme en présence d'une attaque et dans lequel le procédé selon la présente invention n'est pas mis en oeuvre ;

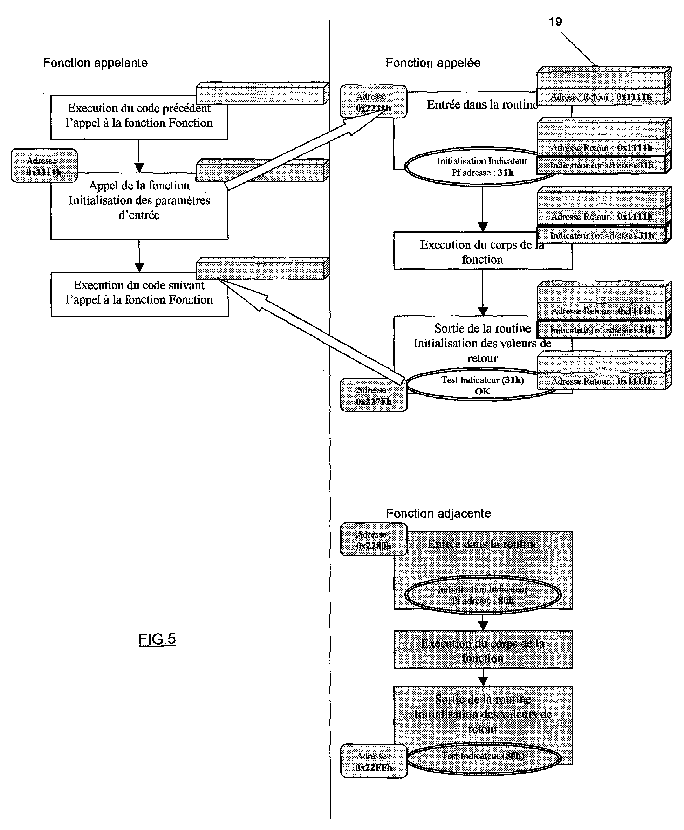

- la figure 5 est un organigramme représentant le déroulement d'un programme sans attaque et dans lequel le procédé selon la présente invention est mis en oeuvre ;

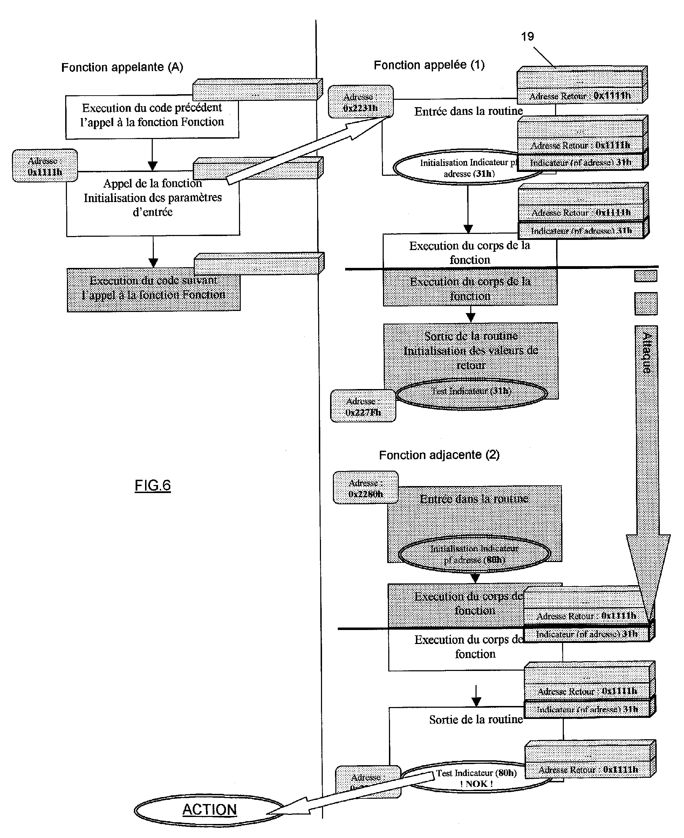

- la figure 6 est un organigramme représentant le déroulement d'un programme en présence d'une attaque et dans lequel le procédé selon la présente invention est mis en oeuvre.

### MANIERE DE REALISER L'INVENTION

Le procédé selon l'invention vise à sécuriser un ensemble électronique, et par exemple un système embarqué tel qu'une carte à puce mettant en oeuvre un programme. L'ensemble électronique comprend au moins un processeur et une mémoire. Le programme pour lequel le procédé selon la présente invention est mis en oeuvre est installé dans la mémoire, par exemple de type ROM dudit ensemble.

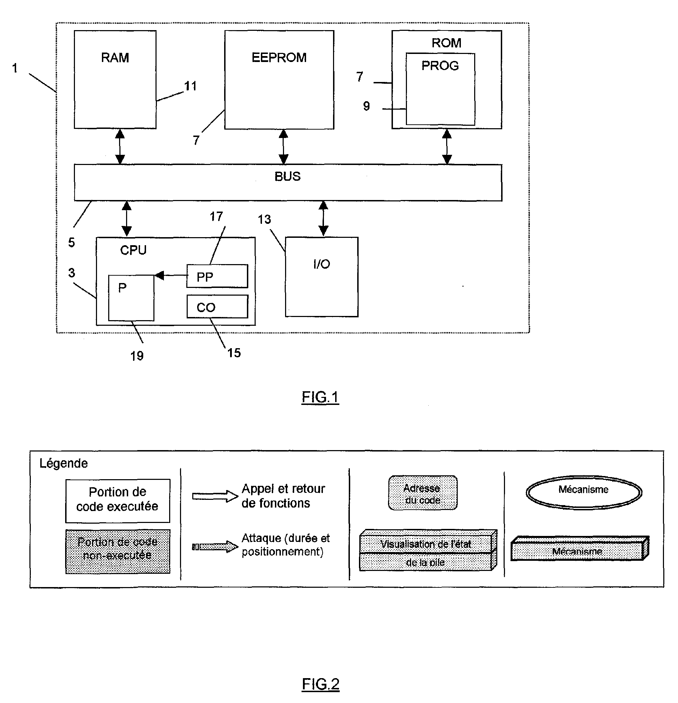

A titre d'exemple non limitatif, l'ensemble électronique décrit dans ce qui suit correspond à un système embarqué comprenant une unité électronique 1 illustrée sur la figure 1. De telles unités sont réalisées le plus souvent sous la forme d'un microcircuit électronique intégré monolithique, ou puce, qui une fois protégée physiquement par tout moyen connu peut être montée sur un objet portatif tel que par exemple une carte à puce, carte à microcircuit ou autre utilisable dans divers domaines.

L'unité électronique 1 à microprocesseur comprend un microprocesseur CPU 3 relié de façon bidirectionnelle par un bus 5 interne à une mémoire 7 non volatile de type ROM, EEPROM, Flash, FeRam ou autre contenant le programme PROG 9 à exécuter, une mémoire 11 vive de type RAM, des moyens 13 I/O d'entrée/sortie pour communiquer avec l'extérieur.

De façon classique, l'unité centrale du microprocesseur CPU 3 illustrée à la figure 1 comporte notamment un registre compteur de programme (ou compteur ordinal) CO 15 donnant l'adresse de la prochaine instruction à exécuter, un registre pointeur de pile PP 17 donnant l'adresse mémoire du sommet d'une pile P 19 d'exécution représentée sur les figures 3 à 6 par des rectangles en trois dimensions.

Comme décrit plus haut et illustré sur la figure 4, une attaque à la lumière peut causer un franchissement de frontière entre deux modules, ici deux routines (fonction appelée (1) et fonction adjacente (2)), appelée ci-après routine 1 et routine 2. L'attaque empêche l'exécution de l'instruction de retour de la première routine 1, et le compteur de programme 15 continue à s'incrémenter, pointant sur les instructions de la routine 2, située à la suite de la routine 1 dans la mémoire programme. Lorsque l'attaque cesse, l'exécution se poursuit dans cette deuxième routine 2. La deuxième routine est donc exécutée en dehors des chemins d'appel prévus et avec des arguments d'appel non initialisés. A l'issue de l'exécution de cette routine 2, l'instruction de retour est exécutée et provoque le retour à la routine appelante, la fonction appelante (A), ci-après appelée routine A : la routine (A) est celle qui a appelé la première routine (1) puisque la deuxième routine (2) n'a pas été appelée. L'exécution de la commande en cours reprend ainsi son cours normal.

Cette attaque menace la sécurité du logiciel de deux manières :
- la première est que l'exécution de la commande en cours peut être perturbée par l'insertion d'une routine selon un déroulement non prévu,
- la deuxième est qu'une routine peut être exécutée en dehors de son contexte normal et avec des arguments d'appel ayant des valeurs incontrôlées.

Selon le procédé de l'invention et en référence à la figure 5 donnant une illustration de la mise en oeuvre du procédé de l'invention dans le déroulement d'un programme sans attaque, est associée à un, plusieurs ou chaque module(s) un indicateur initialisé en début d'exécution du module à la valeur d'un identifiant du module et testé en fin d'exécution dudit module. L'identifiant doit identifier le module par rapport au module suivant et éventuellement précédent dans la mémoire programme ; selon les formes de réalisation, l'identifiant peut identifier le module par rapport à l'ensemble ou une partie des modules intégrés à l'unité. L'identifiant peut par exemple dépendre de l'adresse du module dans la mémoire de manière à être associé au module de manière bi-univoque.

Dans la forme de réalisation illustrée sur les figures 3 à 6, l'indicateur est constitué par une valeur sur un octet obtenu en prenant le poids faible de l'adresse du point d'entrée dudit module ce qui constitue un identifiant du module, par exemple l'octet 31 h pour la routine 1 (point d'entrée : 0x2231h) et l'octet 80h (point d'entrée : 0x2280h) pour la routine 2. Lors de l'entrée dans chaque module, par exemple la routine 1, l'indicateur de la routine 1, à savoir l'octet 31 h identifiant la routine 1, est empilé sur la pile P 19 du processeur [étape appelée sur la figure 5 Initialisation Indicateur]. Dans la suite de la routine, la pile peut être utilisée de la manière habituelle. A la fin de la routine 1, la pile doit être dans le même état qu'elle était en début de routine pour que le retour à la fonction appelante puisse se faire normalement. On dépile l'indicateur constitué par l'octet pointé 31 h par le pointeur de pile 17 et on vérifie qu'il s'agit bien de l'identifiant de la routine 1, à savoir l'octet 31 h [étape appelée sur la figure 5 Test Indicateur].

En présence d'une attaque au cours de l'exécution d'une routine (figure 6), empêchant l'exécution de l'instruction de retour de la routine et provoquant la poursuite de l'exécution dans la routine suivante dans la mémoire programme, le procédé selon la présente invention fonctionne de la manière suivante. L'indicateur de la routine 1, l'octet 31 h a été empilé au début de l'exécution de la routine 1 [Initialisation Indicateur pour la routine 1]. L'instruction d'empilement [Initialisation Indicateur pour la routine 2] de l'indicateur de la routine 2, l'octet 80h identifiant la deuxième routine 2, n'est pas exécutée en raison de l'attaque en cours. A la fin de l'exécution de la deuxième routine 2, si l'attaque a cessé, le test de l'indicateur présent sur la pile du processeur [Test Indicateur pour la routine 2] révélera qu'il s'agit de l'octet 31 h, à savoir l'identifiant de la routine 1 et non pas de l'octet attendu 80h l'identifiant de la deuxième routine 2. L'indicateur ne correspond pas à l'identifiant de la routine exécutée : l'attaque est détectée. Si l'attaque est toujours en cours à la fin de la deuxième routine, l'exécution se poursuit dans une troisième routine puis dans les routines suivantes dans la mémoire programme, le mécanisme détectera l'attaque à la fin de la routine en cours lorsque l'attaque cesse.

Dans le cas où, après une attaque, l'exécution reprend à la fin d'une routine après le code de vérification de l'indicateur [Test Indicateur] mais avant l'instruction de retour, l'exécution se trouvera perturbée et l'attaque détectée de la manière suivante. L'identifiant de la routine en cours n'ayant pas été dépilé, cet identifiant va être pris comme un octet de l'adresse de retour, provoquant un retour à une adresse erronée. Il est fortement probable que cette adresse ne corresponde pas à une adresse de début de fonction mais à une adresse quelconque dans le corps d'une fonction. L'indicateur de cette dernière fonction n'ayant pas été empilé, la vérification de l'indicateur à l'issue de la fonction permettra de détecter une attaque.

Pour que le code d'empilement et de contrôle de l'indicateur de routine au début et à la fin de la routine ne soit pas trop volumineux, il est nécessaire que l'identifiant soit défini statiquement dans les instructions du programme. Sa caractéristique essentielle est qu'il doit être différent de celui de la routine suivante et éventuellement précédente dans la mémoire programme. L'identifiant peut être défini pseudo-aléatoirement, la probabilité d'avoir deux routines consécutives ayant le même identifiant est 1/256, ce qui est acceptable. L'identifiant peut par exemple être obtenu en prenant le poids faible de l'adresse du point d'entrée de la routine ou d'une autre adresse caractéristique de ladite routine (comme celle de son point de sortie ou d'une instruction du corps du module), ce qui fournit un mécanisme simple d'attribution d'identifiants aux routines. Par exemple, la routine 1 a pour adresse de point d'entrée 0x2231 h, l'identifiant de la routine 1 est alors 31 h. Une adresse caractéristique d'un module est une adresse permettant d'identifier ledit module au moins par rapport au module suivant adjacent audit module et éventuellement précédent adjacent audit module dans la mémoire programme.

Le procédé selon la présente invention permet de vérifier que toute fonction appelée s'exécute à partir de son point d'entrée et jusqu'à son point de retour. Selon une autre forme de réalisation du procédé selon la présente invention, le procédé peut également faire l'objet d'une implémentation matérielle (l'implémentation décrite ci-dessus étant une implémentation logicielle). Par exemple, le jeu d'instruction du processeur peut comprendre des instructions spécifiques dédiées au procédé selon la présente invention telles que CALLC et RETC, ajoutées au jeu d'instructions du processeur. L'instruction CALLC d'appel d'une routine située à une adresse de destination effectue l'empilement de l'indicateur de la routine appelée (de l'octet de poids faible de l'adresse de destination) à la suite de l'adresse de retour. En fin de routine, l'instruction RETC prenant un octet en argument correspondant à l'identifiant de la routine (l'octet de poids faible de l'adresse de début de la routine) contrôle la cohérence de cet octet avec l'indicateur présent sur la pile du processeur préalablement à l'exécution du retour.

Un perfectionnement au procédé décrit ci-dessus peut consister à initialiser au début de chaque routine un pointeur sur l'indicateur de la routine après avoir sauvegardé la précédente valeur dudit pointeur. En sortant de la routine, le pointeur est réinitialisé à sa valeur précédente (l'adresse de l'octet identifiant la fonction appelante). Ce mécanisme permet de vérifier à tout moment que l'octet pointé par ce pointeur est l'identifiant de la routine en cours d'exécution. Si ce n'est pas le cas, cela révèle que le début de la routine ne s'est pas exécuté correctement.

L'empilement de l'indicateur sur la pile 19 du processeur présente un intérêt si celle-ci n'est utilisée que pour sauvegarder les adresses de retour et éventuellement certains registres lors des appels de fonction. Dans ce cas, l'indicateur reste sur le sommet de la pile dans le corps de la fonction, ce qui dispense de maintenir par ailleurs un pointeur sur cet indicateur dans le but d'effectuer des vérifications au cours de la routine.

La pile fournit un moyen idéal de stocker au fil de l'exécution les indicateurs des modules appelés successivement et de retrouver l'indicateur de la routine en cours lors du retour au module appelant.

Selon un autre mode de réalisation, les indicateurs des routines peuvent être stockés dans une structure de données différente de la pile 19 du processeur (par exemple une pile du compilateur ou une pile dédiée à cet usage) avec un moyen de retrouver l'indicateur de la routine en cours d'exécution (par exemple un pointeur).

La mise en place de ce mécanisme nécessite l'ajout du code d'empilement de l'octet au début de chaque routine et le code de contrôle de cet octet en fin de chaque routine. Afin de limiter le volume de code ajouté, il est possible de regrouper les routines les plus sécuritaires dans une même zone de mémoire programme et de ne protéger que les routines de cette zone.

L'empilement d'un octet supplémentaire à chaque appel de routine augmente la taille nécessaire pour la pile du processeur. Suivant le composant et le modèle de mémoire utilisé, les adresses de retour d'appel ont une taille de 2 ou 3 octets. L'empilement d'un octet supplémentaire à chaque appel induira une augmentation de 33 à 50% de la taille de la pile du processeur.

Il est décrit ci-dessous un exemple d'implémentation du procédé selon la présente invention :

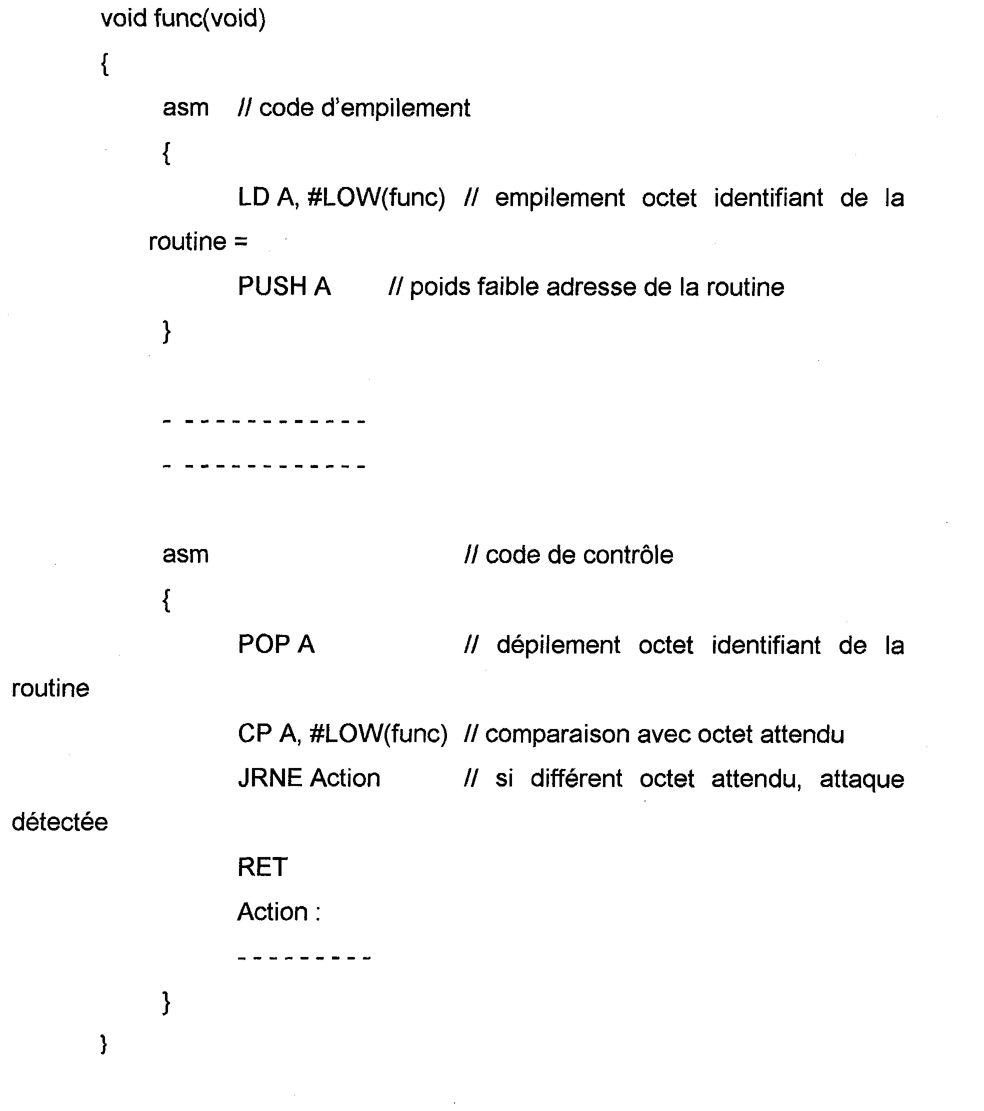

## Revendications

1. Procédé de sécurisation de l'exécution d'au moins un module dans une unité électronique comportant des moyens de traitement de l'information et des moyens de mémorisation d'informations **caractérisé en ce qu'**il consiste, en début d'exécution d'un module, à stocker dans lesdits moyens de mémorisation un indicateur constitué par un identifiant dudit module, et à la fin de l'exécution dudit module, à retrouver ledit indicateur stocké dans lesdits moyens de mémorisation et à vérifier que ledit indicateur correspond à l'identifiant du module exécuté.

2. Procédé selon la revendication 1, **caractérisé en ce que** les moyens de mémorisation et les moyens permettant de retrouver ledit indicateur stocké sont constitués par une pile et un pointeur associé, et le procédé consiste à placer ledit indicateur sur ladite pile en début d'exécution dudit module et à vérifier, à la fin de son exécution, que l'indicateur lu sur la pile correspond à l'identifiant dudit module.

3. Procédé selon l'une des revendications 1 ou 2, **caractérisé en ce que** l'identifiant dépend d'une adresse caractéristique dudit module.

4. Procédé selon l'une des revendications 1 à 3, **caractérisé en ce que** l'identifiant est choisi de manière à identifier ledit module au moins par rapport au module suivant adjacent dans la mémoire dans laquelle lesdits modules sont stockés et éventuellement au module précédent.

5. Procédé selon l'une des revendications précédentes, **caractérisé en ce que** le stockage et la vérification sont exécutés par des instructions spécifiques du processeur.

6. Procédé selon l'une des revendications précédentes, **caractérisé en ce que** lesdits moyens de mémorisation sont constitués par une zone mémoire déterminée, **en ce que** les moyens permettant de retrouver ledit indicateur dans ladite zone mémoire sont constitués par un pointeur, et **en ce que** le procédé consiste à initialiser en début d'exécution dudit module ledit pointeur sur ledit indicateur et à sauvegarder la valeur précédente dudit pointeur de manière à réinitialiser le pointeur à sa valeur précédente avant de poursuivre l'exécution dans le module appelant dudit module.

7. Unité électronique comportant des moyens de traitement de l'information et des moyens de mémorisation d'informations contenant au moins un module à exécuter **caractérisé en ce qu'**il comporte des moyens permettant en début d'exécution d'un module, de stocker dans lesdits moyens de mémorisation un indicateur constitué par un identifiant dudit module, des moyens permettant à la fin de l'exécution dudit module, de retrouver ledit indicateur stocké dans lesdits moyens de mémorisation et de vérifier que l'indicateur stocké correspond à l'identifiant du module exécuté.

8. Unité selon la revendication 7, **caractérisé en ce que** les moyens de mémorisation et les moyens permettant de retrouver ledit indicateur stocké sont constitués par une pile.

9. Carte **caractérisée en ce qu'**elle comprend l'unité électronique selon l'une des revendications 7 ou 8.

10. Programme comprenant des instructions de code de programme pour l'exécution des étapes du procédé selon l'une des revendications 1 à 6 lorsque ledit programme est exécuté dans une unité électronique.
